# DEMANDE DE BREVET EUROPEEN

(11) **EP 0 976 515 A1**
(43) Date de publication de la demande: **02.02.2000**
(21) Numéro de dépôt: 99114403.1
(22) Date de dépôt: 22.07.1999
(51) Int. Cl.: B29B 15/12

(54) **Procédé et installation d'imprégnation d'un composé textile destiné essentiellement à la réalisation d'un matériau de friction, ainsi que composé textile, fil et matériau de friction**

(30) Priorité: 31.07.1998 FR 9809827
(71) Demandeur: VALEO, 75017 Paris (FR)
(72) Inventeur: Juillard, Eric, 87000 Limoges (FR)
(74) Mandataire: Gamonal, Didier

(57) **Abrégé**

L'invention a pour objet un procédé et une installation d'imprégnation d'un composé textile tel que, plus particulièrement, un fil ou une mèche textile destiné essentiellement, mais non exclusivement, à la réalisation d'un matériau de friction tel qu'une couronne d'embrayage fonctionnant à sec.

Le procédé consiste à introduire le composé textile (21) dans une buse (20) dans laquelle est amené à circuler un liquide ou un produit pâteux d'imprégnation (23).

## Description

La présente invention a pour objet un procédé et une installation d'imprégnation d'un composé textile tel que, plus particulièrement, un fil ou une mèche textile destiné essentiellement, mais non exclusivement, à la réalisation d'un matériau de friction tel qu'une couronne d'embrayage fonctionnant à sec.

Elle a également pour objet un composé textile, un fil imprégné ainsi qu'un matériau de friction réalisés au moyen du procédé et de l'installation selon l'invention.

Pour réaliser une couronne d'embrayage, on utilise un fil à base de fibres minérales comme des fibres de verre, de fibres organiques et, éventuellement, de fils ou filaments métalliques, imprégné d'un mélange comportant un liant tel qu'une résine thermodurcissable et des charges.

Le fil imprégné est placé de manière enroulée ou lovée pour former une ébauche de couronne qui est ensuite soumise à un traitement thermique sous pression.

Après diverses opérations mécaniques et/ou chimiques, telles que rectification, surcuisson, perçage,... la couronne d'embrayage est prête à être montée sur un disque de friction d'embrayage.

Les caractéristiques qualités de la couronne telles que le coefficient de frottement, sa stabilité en fonction de la température, les conditions d'usure,... dépendent pour une part très importante, non seulement des produits d'imprégnation, mais aussi de la qualité de l'imprégnation du fil utilisé.

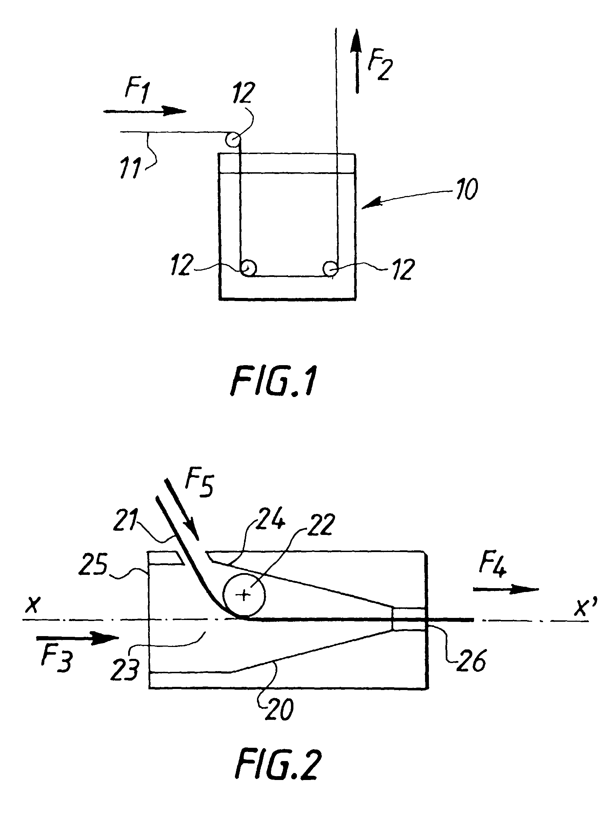

A la figure 1 on a représenté un bac d'imprégnation 10 utilisé conformément à l'état de la technique.

Un fil 11 est amené dans le bac d'imprégnation 10 en étant tiré en continu dans le sens de la flèche F1 et guidé par des barres de maintien 12 et ressort du bac 10 dans le sens de la flèche F2.

Le bac d'imprégnation 10 contient un produit d'imprégnation ou ciment 13 pâteux dans lequel le fil 11 est amené à tremper.

La pénétration du ciment s'effectue uniquement par transfert lié au trempage et dépend de la longueur immergée du fil 11 et de sa vitesse de déplacement.

Cette dernière doit être faible, en pratique de l'ordre de 4 m/mn, pour assurer une pénétration du ciment dans le fil. De plus, dans ce même but, la longueur de fil immergé doit être relativement importante, ce qui nécessite de prévoir un bac d'imprégnation de grande taille et, par conséquent, de travailler avec une grande quantité de liquide d'imprégnation.

Les résultats, selon ce procédé d'imprégnation de l'état de la technique, sont médiocres et très sensibles à la variation des paramètres de fonctionnement de l'installation d'imprégnation.

En général, le fil est insuffisamment imprégné à coeur.

Le procédé ne permet pas un traitement d'imprégnation rapide.

La présente invention a pour but de pallier les inconvénients de la technique d'imprégnation antérieure.

Le procédé d'imprégnation d'un composé textile, selon l'invention, est caractérisé en ce qu'il consiste à introduire le composé textile dans une buse dans laquelle est amené à circuler un liquide ou un produit pâteux d'imprégnation.

L'installation d'imprégnation, selon l'invention, est caractérisée par l'utilisation d'une buse dans laquelle est amené à circuler un liquide ou un produit pâteux d'imprégnation et dans laquelle un composé textile circule.

Selon d'autres caractéristiques de l'invention pouvant être prises séparément ou dans toutes leurs combinaisons techniquement possibles :
- la buse présente une section qui diminue entre une entrée et une sortie de celle-ci ;
- des moyens sont prévus pour déplacer le composé textile depuis une zone voisine de l'entrée de la buse, jusqu'à la sortie de la buse ;
- la buse est de forme globalement conique ;
- des moyens sont prévus pour amener le composé textile dans la buse au travers d'une face latérale de celle-ci ;
- des moyens sont prévus pour dévier le composé textile à l'intérieur de la buse pour prendre une orientation correspondant à l'axe de la buse ;
- les moyens prévus pour déplacer le composé textile agissent en continu ;
- des moyens d'introduction du liquide ou du produit pâteux d'imprégnation par l'entrée de la buse sont prévus ;
- des moyens d'introduction du liquide ou le produit pâteux d'imprégnation sont adaptés à réaliser une introduction dans l'axe de la buse ;
- la section de sortie de la buse est circulaire;
- la section de sortie de la buse est de forme oblongue ;
- la section de sortie de la buse est supérieure d'environ 10 % à celle du composé textile ;
- le liquide ou le produit pâteux d'imprégnation est introduit au moyen d'une pompe ;
- la pompe est à débit et/ou pression réglable(s).

L'invention a également pour objet un composé textile caractérisé en ce qu'il est obtenu par le procédé selon l'invention.

L'invention a encore pour objet un matériau de friction tel que plus particulièrement une couronne d'embrayage fonctionnant à sec, caractérisé par l'utilisation d'un fil ou composé textile imprégné par le procédé et l'utilisation selon l'invention.

Grâce à l'invention on a pu obtenir une imprégnation plus rapide au moyen d'une installation plus compacte que celles de l'état de la technique.

Par ailleurs, on a pu constater que l'imprégnation est de meilleure qualité, plus homogène et arrivant à coeur du composé textile.

Quant aux couronnes d'embrayages réalisées selon l'invention, on a pu noter qu'elles présentent de remarquables qualités, en particulier en matière de coefficient de frottement, de stabilité de celui-ci.

D'autres caractéristiques et avantages de l'invention apparaîtront à la lecture de la description d'un exemple de réalisation, en référence aux dessins annexés qui représentent :
- à la figure 1, déjà citée, une installation d'imprégnation conforme à l'état de la technique ;
- à la figure 2, une installation d'imprégnation selon l'invention.

A la figure 2 est représentée une buse conique 20 au travers de laquelle défile un composé textile 21. Le composé textile 21 est déplacé depuis une zone voisine de l'entrée 25 de la buse 20 dans le sens de la flèche F5, jusqu'à la sortie 26 de la buse 20 dans le sens de la flèche F4.

Comme représenté, le composé textile 21 est amené dans la buse 20 au travers d'une face latérale 24 de celle-ci.

Le composé textile est dévié à l'intérieur de la buse 20 au moyen d'un guide 22 tel qu'un galet ou rouleau tournant, pour prendre la direction de l'axe xx' de la buse 20.

L'entrée 25 de la buse 20 présente une section plus importante que celle de la sortie 26 de la buse 20.

Un système d'entraînement à vitesse réglable, non représenté, permet l'entraînement en continu du composé textile 21.

Un liquide ou produit pâteux 23 est introduit axialement dans la buse 20 par sa face d'entrée 25, dans le sens de la flèche F3, au moyen d'une pompe non représentée à débit et/ou pression réglable(s).

La section de la sortie 26 de la buse 20 est supérieure d'environ 10 % à celle du composé textile 21. La forme de la section de sortie 26 est circulaire, en particulier lorsque le composé textile 21 est un fil. Elle peut être de forme oblongue, en particulier lorsque le composé textile 21 se présente sous la forme d'une mèche textile.

Le composé textile est avantageusement un fil formé à partir de fibres minérales comme des fibres de verre, des fibres organiques et éventuellement des fils ou filaments métalliques.

Le liquide ou le produit pâteux d'imprégnation est de préférence à base d'eau et contient en mélange et/ou en suspension, notamment une résine thermodurcissable, du latex, des charges.

On obtient, grâce au procédé et à l'installation selon l'invention, une parfaite imprégnation à coeur du composé textile avec une rapidité de traitement accrue de manière importante et dans un encombrement beaucoup plus réduit par rapport à l'état de la technique.

Après imprégnation, le composé textile est séché totalement ou partiellement avant d'être stocké ou directement utilisé pour former, dans un moule en forme de couronne, une ébauche de couronne d'embrayage en étant disposé d'une manière ondulée ou lovée.

L'ébauche ainsi réalisée est ensuite soumise à un traitement thermique sous pression.

Après diverses opérations mécaniques et/ou chimiques, telles que rectification, surcuisson, perçage,... la couronne d'embrayage est prête à être montée sur un disque de friction d'embrayage.

On a pu constater que des disques de friction d'embrayages comportant des couronnes réalisées, comme indiqué ci-dessus, présentent de remarquables propriétés tant au niveau du coefficient de frottement que de la stabilité de ce coefficient à différentes températures de fonctionnement, ainsi qu'une grande résistance à l'usure.

## Revendications

1. Procédé d'imprégnation d'un composé textile (21), caractérisé en ce qu'il consiste à introduire le composé textile (21) dans une buse (20) dans laquelle est amené à circuler un liquide ou un produit pâteux d'imprégnation (23).

2. Installation d'imprégnation d'un composé textile (21), caractérisée par l'utilisation d'une buse (20) dans laquelle sont amenés à circuler un liquide ou un produit pâteux d'imprégnation (23) et un composé textile.

3. Installation d'imprégnation selon la revendication 2, caractérisée en ce que la buse (20) présente une section qui diminue entre une entrée (25) et une sortie (26) de celle-ci.

4. Installation d'imprégnation selon la revendication 3, caractérisée en ce que des moyens sont prévus pour déplacer le composé textile (21) depuis une zone voisine de l'entrée (25) de la buse, jusqu'à la sortie (26) de la buse.

5. Installation d'imprégnation selon la revendication 4, caractérisée en ce que la buse (20) est de forme globalement conique.

6. Installation d'imprégnation selon l'une quelconque des revendications 2 à 5, caractérisée en ce des moyens sont prévus pour amener le composé textile (21) dans la buse (20) au travers d'une face latérale (24) de celle-ci.

7. Installation d'imprégnation selon la revendication 6, caractérisée en ce que des moyens (22) sont prévus pour dévier le composé textile (21) à l'intérieur de la buse (20) pour prendre une orientation correspondant à l'axe (xx') de la buse (20).

8. Installation d'imprégnation selon l'une quelconque des revendications 4 à 7, caractérisée en ce que les moyens prévus pour déplacer le composé textile (21) agissent en continu.

9. Installation d'imprégnation selon l'une quelconque des revendications 2 à 8, caractérisée en ce que des moyens d'introduction du liquide ou du produit pâteux d'imprégnation (23) par l'entrée (25) de la buse (20) sont prévus.

10. Installation d'imprégnation selon la revendication 9, caractérisée en ce que des moyens d'introduction du liquide ou le produit pâteux d'imprégnation (23) sont adaptés à réaliser une introduction dans l'axe (xx') de la buse (20).

11. Installation d'imprégnation selon l'une quelconque des revendications 2 à 10, caractérisée en ce que la section de sortie (26) de la buse (20) est circulaire.

12. Installation d'imprégnation selon l'une quelconque des revendications 2 à 10, caractérisée en ce que la section de sortie (26) de la buse (20) est de forme oblongue.

13. Installation d'imprégnation selon l'une des revendications 11 ou 12, caractérisée en ce que la section de sortie (26) de la buse est supérieure d'environ 10 % à celle du composé textile (23).

14. Composé textile imprégné, caractérisé en ce qu'il est obtenu par le procédé et au moyen de l'installation, selon l'une quelconque des revendications 1 à 13.

15. Fil imprégné selon la revendication 14, caractérisé en ce qu'il est formé à partir de fibres minérales comme des fibres de verre, de fibres organiques et éventuellement de fils ou filaments métalliques.

16. Matériau de friction tel que plus particulièrement une couronne d'embrayage fonctionnant à sec, caractérisé par l'utilisation d'un fil ou compose textile (23) imprégné par le procédé et/ou au moyen de l'installation et/ou d'un fil, selon l'une quelconque des revendications 1 à 15.
